Europäisches Patentamt

European Patent Office

Office européen des brevets

(11) Veröffentlichungsnummer: **0 234 301**
**B1**

(12) **EUROPÄISCHE PATENTSCHRIFT**

(45) Veröffentlichungstag der Patentschrift: **11.04.90**

(21) Anmeldenummer: **87101023.7**

(22) Anmeldetag: **26.01.87**

(51) Int. Cl.$^5$: **B 29 C 55/30, B 29 C 55/22**

(54) **Verfahren und Vorrichtung zum Herstellen von Hohlkörpern aus thermoplastischem Kunststoff.**

(30) Priorität: **07.02.86 DE 3603845**

(43) Veröffentlichungstag der Anmeldung:
**02.09.87 Patentblatt 87/36**

(45) Bekanntmachung des Hinweises auf die
Patenterteilung:
**11.04.90 Patentblatt 90/15**

(84) Benannte Vertragsstaaten:
**AT BE CH DE ES FR GB GR IT LI LU NL SE**

(56) Entgegenhaltungen:
**GB-A- 724 251**
**GB-A-2 092 943**
**US-A-4 420 454**
**US-A-4 554 815**

(73) Patentinhaber: **Krupp Corpoplast Maschinenbau GmbH.**
**Angerburger Strasse 24**
**D-2000 Hamburg 70 (DE)**

(72) Erfinder: **Albrecht, Peter**
**Sülzbrackring 1**
**D-2050 Hamburg 80 (DE)**
Erfinder: **Reymann, Wolfgang**
**Groten Hoff 15**
**D-2000 Hamburg 67 (DE)**
Erfinder: **Vogel, Klaus**
**Rütersberg 4 a**
**D-2000 Barsbüttel (DE)**
Erfinder: **Werner, Hermann**
**Kirchenredder 4**
**D-2000 Hamburg 63 (DE)**

(74) Vertreter: **Koepsell, Helmut, Dipl.-Ing.**
**Mittelstrasse 7**
**D-5000 Köln 1 (DE)**

Courier Press, Leamington Spa, England.

## Beschreibung

Die Erfindung betrifft ein Verfahren und eine Vorrichtung zum Herstellen von Hohlkörpern aus orientiertem thermoplastischem Kunststoff, bei welchem der zylindrische Bereich eines hohlen, mit einem Boden versehenen Vorformlings bei einer Ausgangstemperatur, die unter der Glasumwandlungstemperatur liegt, unter gleichzeitiger Verringerung der Wandstärke durch einen mit einer konischen Stützschulter versehenen Ziehring zu einem gestreckten Formling gestreckt wird und innerhalb des Vorformlinges zur Abstützung des zu streckenden Bereiches desselben ein Dorn angeordnet ist, dessen Außendurchmesser dem Innendurchmesser des zu streckenden zylindrischen Bereiches entspricht.

Ein solches Verfahren wird, vorzugsweise unter Verwendung von Vorformlingen aus linearen Polyestern, als beispielsweise Polyäthylenterephtalat (PETP) oder Polybutylenterephtalat (PBTP), z.B. dann benutzt, wenn Behälter für Füllgüter, die unter hohem Überdruck stehen, wie z.B. kohlensäurehaltige Getränke, herzustellen sind. Im allgemeinen wird dabei so vorgegangen, daß der erwärmte etwa becherförmige Vorformling, der durch Spritzgießen hergestellt sein kann, über einen Dorn gesteckt wird, dessen Länge zumindest der des gestreckten Formlings entspricht und dessen Außendurchmesser etwa dem Innendurchmesser des Vorformlinges entspricht, der mit dem des gestreckten Formlinges im wesentlichen übereinstimmt. Der Streckvorgang wird im allgemeinen so ausgeführt, daß der Ziehring, ausgehend vom bodenseitigen Ende des Vorformlings, entlang der zylindrischen Wandung desselben in Richtung auf dessen freies Ende bewegt wird, wobei der Dorn den Vorformling gegen die Bewegung des Ziehrings abstützt. Dabei wird dieser Wandungsabschnitt unter gleichzeitiger merklicher Verringerung seiner Wandstärke z.B. bei PETP etwa auf das Drei- bis Vierfache seiner Ausgangslänge gestreckt. Der Dorn hat ferner die Funktion, den zu streckenden Wandbereich abzustützen, um so eine Durchmesserverringerung desselben während des Streckvorganges zu verhindern.

Der Ziehring hat lediglich die Funktion, die für den Streckvorgang erforderlichen Kräfte auf den Vorformling zur Einwirkung zu bringen. Er dient nicht der Dimensionierung der Wandung des gestreckten Formlings z.B. derart, daß die resultierende Wanddicke des Formlings in dem zwischen Ziehring und Dorn befindlichen Spalt kalibriert würde. Vielmehr stellt sich die aus dem Streckvorgang resultierende Wanddicke des gestreckten Formlings ein in Abhängigkeit von bestimmten, insbesondere materialabhängigen Parametern, beispielsweise der Ausgangswanddicke des zu streckenden Bereiches und den Eigenschaften des Materials, aus welchem der Vorformling besteht. Eine darüber hinausgehende willkürliche Beeinflussung der resultierenden Wanddicke ist nicht möglich. Demzufolge ist der kleinste Innendurchmesser des Ziehrings zwar kleiner als der Außendurchmesser des zu streckenden Bereichs des Vorformlings, jedoch geringfügig größer als der Außendurchmesser des gestreckten Formlings Der zwischen dem Ziehring im Bereich von dessen kleinstem Durchmesser einerseits und der äußeren Mantelfläche des bereits gestreckten zylindrischen Bereiches des Vorformlinges andererseits verbleibende Spalt ist sehr klein. So kann beispielsweise bei einem Dorndurchmesser von 40 mm und einem entsprechenden Innendurchmesser des Vorformlings, dessen Wandstärkein ungestrecktem Zustand im zylindrischen Bereich bei 1,5—2 mm liegen kann, die Breite des Gesamtspaltes zwischen Ziehring im Bereich von dessen kleinstem Durchmesser und Mantelfläche des Dorns z.B. 0,7 mm betragen. Davon werden etwa 0,5 m vom bereits umgeformten, also gestreckten Material eingenommen, so daß der verbleibende Spalt zwischen dem Bereich kleinsten Durchmessers des Ziehringes und der äußeren Mantelfläche dieses bereits gestreckten Materials in der Größenordnung von 0,2 mm liegt. Es ist für die Qualität des herzustellenden Endproduktes von Bedeutung, daß eine Berührung zwischen dem Ziehring und dem bereits gestreckten Material vermieden wird. Eine solche Berührung führt auf der Oberfläche des Zwischenerzeugnisses zu Riefen, Streifen oder dgl., die zumindest das Aussehen des Enderzeugnisses beeinträchtigen. Bei Einwirkung von merklichen radialen Druckkräften durch seitlichen Kontakt mit dem Ziehring wird die Struktur des bereits gestreckten Materials in Mitleidenschaft gezogen, so daß die mechanische Festigkeit des Enderzeugnisses Einbußen erleidet, wenn es nicht sogar während des Ziehvorganges zum Abreißen des Materials kommt. Eine Vergrößerung des Spaltes zwischen dem Bereich kleinsten Durchmessers des Ziehringes einerseits und dem bereits gestreckten Abschnitt des Vorformlings andererseits ist jedenfalls in einem ins Gewicht fallenden Ausmaß nicht möglich, da sonst die für den Streckvorgang erforderliche Abstützung des die zu streckende Wandung des Vorformlings bildenden Materials an der konischen Stützschulter des Ziehringes nicht mehr gewährleistet wäre. Dabei ist zu berücksichtigen, daß die Ziehkräfte relativ groß sind und bis zu 1 t betragen können. Der Dorn ist relativ schlank. Bei dem vorerwähnten Durchmesser von 40 mm kann seine Länge z.B. etwa 400 mm betragen. Daraus ergibt sich, daß Dorn und/oder Ziehring bei ihrer relativen Bewegung zueinander mit großer Genauigkeit geführt werden müssten. Dies setzt genaue Führungselemente sowie eine ausreichende Steifigkeit derselben und der sie tragenden Konstruktion voraus.

Selbst bei präziser Ausbildung der Führungselementekönnen die unvermeidbaren elastischen Verformungen der zusammenwirkenden Teile im ungünstigen Fall dazu führen, daß beim genannten Beispiel ein Spalt von 0,2 mm Breite nicht mehr ausreicht, um eine Berührung zwischen dem Ziehring und dem Material des bereits gestreckten Abschnitt des Vorformlinges mit

2

Sicherheit zu vermeiden. Darüber hinaus sind aber auch zusätzliche Einflüsse zu berücksichtigen, nämlich unvermeidbare Toleranzen in den Führungselementen sowie ein nicht ganz präziser Einbau von Dorn und/oder Ziehring derart, daß die Achsen beider Teile nicht genau miteinander fluchten. Dabei reicht bei der genannten Spaltgröße von z.B. 0,2 mm bereits eine ganz geringe Winkelabweichung z.B. des Dornes aus, um im Zuge des Ziehvorganges eine Berührung zwischen Ziehring und bereits gestreckten Bereichen des Vorformlinges zu vurursachen.

Der Erfindung liegt unter anderem die Aufgabe zugrunde, Verfahren und Vorrichtung der einleitend beschriebenen Art so auszubilden, daß trotz der vorstehend beschriebenen Schwierigkeiten auch bei Herstellung der Hohlkörper in großen Stückzahlen eine gleichbleibende, einwandfreie Qualität derselben gewährleistet ist. Dabei wird angestrebt, den zur Erreichung dieses Ziels erforderlichen Aufwand so gering wie möglich zu halten. Verfahrensführung und dazu benutzte Vorrichtungen sollen einfach und übersichtlich sein.

Zur Lösung dieser Aufgabe schlägt die Erfindung vor, daß der Ziehring, dessen kleinster Innendurchmesser geringfügig größer ist als der Außendurchmesser des gestreckten Bereiches des Vorformlinges, quer zur Zierichtung frei beweglicht gelagert ist und unter der Einwirkung der ihn beaufschlagenden Umformkräfte sich selbsttätig zum Vorformling und zu dem in diesem befindlichen Dorn zentriert. Dabei wird zweckmäßig so verfahren, daß der Ziehring quer zur Ziehrichtung sich um ein Ausmaß bewegen kann, welches größer ist als der Spalt zwischen dem kleinsten Innendurchmesser des Ziehringes und dem Außendruchmesser des gestreckten Bereiches des Vorformlings bei genau zentrischer Lage der Teile zueinander.

Die selbsttätige Einstellung des Ziehringes in Abhängigkeit von den während des Ziehvorganges auf ihn einwirkenden Umformkräfte führt zwangsläufig dazu, daß die Auswirkungen der vorstehend angeführten möglichen Unregelmäßigkeiten und Ungenauigkeiten selbsttätig kompensiert werden. Somit wird eine zumindest annähernd zentrische Lage des Ziehringes zum Dorn und zu dem diesen umgebenden zylindrischen Bereich des Vorformlinges eingehalten. Somit wird jedenfalls eine so weitgehende außermittige Lage des Ziehrings zum Dorn, daß ersterer in Berührung mit dem gestreckten Abschnitt des Vorformlings kommt, ausgeschlossen sein. Zu den erwähnten Ungenauigkeiten und Unregelmäßigkeiten können auch Schwankungen in der Wanddicke des gestreckten Bereiches des Vorformlinges gehören. Derartige Schwankungen, deren absolute Größe gering ist, sind auf Schwankungen in der Ausgangswandstärke des Vorformlinges zurückzuführen, die auch bei Herstellen desselben im Spritzgießverfahren allein schon aufgrund der dem Kunstoff innewohnenden Eigenschaften nicht gaz vermeidbar sind.

Die Vorrichtung zur Durchführung des Verfahrens gemäß der Erfindung weist einen mit einer konischen Stützschulter versehenen Ziehring auf, der quer zur Ziehrichtung bewegbar gelagert ist. Das Ausmaß der maximal möglichen Querbewegung des Ziehringes sollte größer sein als der Spalt bei normalen Betriebsbedingungen zwischen kleinstem Innendurchmesser des Ziehringes und Außendurchmesser des bereits gestreckten Bereiches des Vorformlinges vorhandene Spalt und so bemessen sein, daß die im praktischen Betrieb in Betracht kommenden Abweichungen bezüglich der axialen Lage von Ring und Dorn kompensiert werden können.

Ein wesentlicher Vorteil der Erfindung besteht darin, daß der angestrebte Effekt mit einfachen Mitteln erzielbar ist. Es reicht aus, daß der Ziehring innerhalb des ihn tragenden und gegebenenfalls führenden Maschinenelementes unter Zwischenschaltung von Lagern angeordnet ist. Diese Lager sollten möglichst reibungsarm sein, da die leichte Verschiebbarkeit des Ziehringes quer zur Ziehrichtung eine Voraussetzung für das Eintreten des angestrebten Effektes ist. Besonders geeignet zur Erzielung einer reibungsarmen Lagerung sind Kugellager. Eine andere Möglichkeit besteht darin, den Ziehring in einem Kardangelenk zu lagern, wobei die Wirkebene des Kardangelenks zur Schulter des Ziehrings einen Abstand aufweist, der ein Pendeln des Ziehrings um ein Maß erlaubt, welches größer ist als der Spalt zwischen dem Bereich kleinsten Innendurchmesser des Ziehringes und dem Außendurchmesser des gestreckten Abschnittes des Vorformlings.

Die das Zentrieren bewirkenden radialen Kräfte sind die radialen Komponenten der Umformkräfte, die an der konischen Stützschulter des Ziehringes aufgrund der axialen Ziehkraft entstehen. Da die konische Stützschulter über ihren gesamten Umfang die gleiche Konizität aufweist und der zu streckende Bereich des Vorformlinges zylindrisch ausgebildet ist und sich somit auch über den gesamten Umfang des Ziehringes und damit auch von dessen Stützschulter erstreckt, heben die über den Umfang des Ziehringes auf diesen zur Einwirkung kommenden radialen Kräfte einander auf, solange keine Unregelmäßigkeiten vorhanden sind. Sobald der Ring z.B. aufgrund einer geringfügigen Verformung oder sonstigen Verschiebung des Dornes in eine außermittige Lage zu diesem gerät, bewirken die radialen Komponenten der Umformkräfte durch eine entsprechende Querverschiebung eine Anpassung der Position des Ringes an die des Dornes, bis die zentrische Lage wieder erreicht ist und die radialen Kräfte einander aufheben.

In der Zeichnung ist ein Ausführungsbeispiel dargestellt. Es zeigen:

Fig. 1 den Längsschnitt eines Vorformlings in ungestrecktem Zustand,

Fig. 2 die Teilansicht einer Vorrichtung zum Strecken des zylindrischen Bereichs des Vorformlings gemäß Fig. 1, teilweise im Längsschnitt,

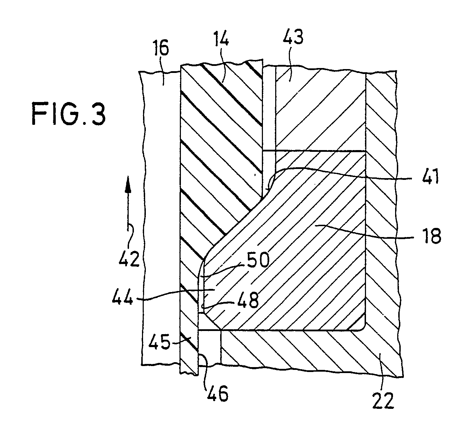

Fig. 3 einen Ausschnitt aus Fig. 2 in größerem Maßstab.

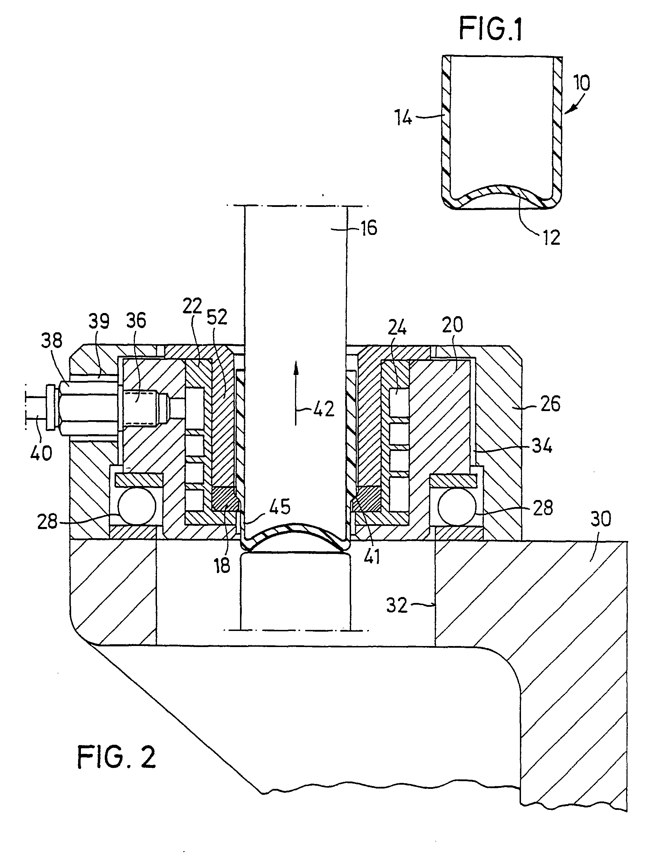

Der in Fig. 1 dargestellte becherartige Vorformling 10 besteht aus einem nach innen gewölbten Bodenteil 12 und einem sich daran anschließenden, im wesentlichen zylindrischen Bereich 14, der zur Verbesserung der mechanischen Eigenschaften des herzustellenden Enderzeugnisses eine Streckung in Richtung des Verlaufs seiner Längsachse derart erfährt, daß beispielsweise die Wandung des zylindrischen Bereiches 14 auf etwa ein Drittel ihrer Ausgangsdicke reduziert wird.

Die Vorrichtung zur Durchführung des Ziehvorganges besteht im wesentlichen aus einem Dorn 16 und einem diesen umgebenden Ziehring 18, der in einer schalenförmigen Halterung unter Zwischenschaltung eines ebenfalls im wesentlichen hohlzylindrisch ausgebildeten Bauteiles 22, welches gemeinsam mit der Halterung 20 ein Kanalsystem 24 für ein Kühl- und/oder Heizmedium begrenzt, angeordnet ist. Die aus den mit genauer Passung zusammengefügten Teilen 18, 20, 22 bestehende Einheit ist innerhalb eines Gehäuses 26 angeordnet und über Kugellager 28 auf einer Konsole 30 gelagert, an welcher das Gehäuse 26 fest angebracht ist. Die Konsole 30 ist vertikal auf- und abbewegbar gegenüber dem während des Ziehvorganges stationären Dorn 16 angeordnet. Sie ist mit einer Durchbrechung 32 für den Durchgang des Dornes 16 versehen.

Fig. 2 der Zeichnung läßt erkennen, daß die Halterung 20 unter Belassung eines umlaufenden Ringspaltes in das Gehäuse 26 eingesetzt ist. D.h., daß der Ziehring 18 mit den ihm zugeordneten Teilen 20 und 22 innerhalb des Gehäuses quer zur Bewegungsrichtung der Konsole 30 und damit des Ziehringes 18, also in der Horizontalen, um ein bestimmtes Ausmaß, welches durch die Breite des Spaltes 34 festgelegt ist, bewegbar, also schwimmend gelagert ist.

Die Halterung 20 ist mit einer im wesentlichen radial verlaufenden Durchbrechung 36 versehen, die an ihrer dem Dorn 16 zugekehrten Ende in dem Kanalsystem 24 mündet und an ihrem anderen Ende über eine Schraubverbindung 38 an einen Schlauch 40 angeschlossen ist. Für den Durchgang der Schraubverbindung ist das Gehäuse 26 an dieser Stelle mit einer ebenfalls im wesentlichen radial verlaufenden Durchbrechung 39 versehen, deren Querabmessungen so groß sind, daß die Schraubverbindung 38 irgendwelchen Bewegungen der Halterung 20 und damit des Ziehringes 18 ohne weiteres folgen kann. Der Schlauch 40 dient der Zuleitung eines Heiz- und/oder Kühlmediums. Für die Ableitung desselben ist an anderer Stelle der Vorrichtung eine zweiten, nicht dargestellte, derartige Anordnung vorhanden, um so den Kreislauf für das Kühl- oder Heizmedium zu schließen.

Der Ziehring 18 ist in seinem unteren, den Ziehvorgang bewirkenden Bereich innenseitig mit einer umlaufenden Stützschulter 41 versehen, die derartig konisch verlaufend ausgebildet ist, daß der Innendurchmesser dieser Schulter 41 entgegen der Ziehrichtung 42 abnimmt. Die Stützschulter 41 verbindet zwei Bereiche unterschiedlichen Innendurchmessers des Ziehringes 18. Im oberhalb der Schulter 41 befindlichen Bereich 43 größeren Innendurchmessers ist letzterer so gewählt, daß er etwas größer ist als der Außendurchmesser des zylindrischen Bereiches 14 des Vorformlinges 10 in ungestrecktem Zustand. In dem unterhalb der Stützschulter 41 befindlichen Bereich 44 kleineren Innendurchmessers ist letzterer so gewählt, daß er geringfügig größer ist als der Außendurchmesser des bereits gestreckten Abschnittes 45 des Vorformlinges 10, so daß zwischen dessen äußerer Mantelfläche 48 und der inneren Mantelfläche des Bereiches kleineren Durchmessers 44 ein Ringspalt 50 verbleibt, dessen radiale Abmessung relativ klein ist.

Das Verfahren gemäß der Erfindung wird in der Weise durchgeführt, daß, nachdem der Vorformling 10 mit dem darin befindlichen Dorn 16 in die für den Ziehvorgang vorgesehene Position gebracht worden ist, der in seiner Ausgangsstellung mit seinem Bereich 44 kleineren Durchmessers sich unterhalb des Bodens 12 des Vorformlinges 10 befindliche Ziehring 18 nach oben, also in Richtung des Pfeiles 42 bewegt wird. Dabei gerät der Bereich 44 kleineren Durchmessers des Ziehringes 18 in Eingriff mit dem unteren Ende des Vorformlinges 10 an desen Umfang mit dem Ergebnis, daß in Zuge der weiteren Bewegung in Richtung 42 die Wandung des zylindrischen Teiles 14 des Vorformlinges 10 bei gleichzeitiger Verringerung der Wanddicke eine Streckung erfährt, die durch den Formschluß zwischen Stützschulter 41 und dem Abschnitt des zylindrischen Bereiches 14, der noch die Ausgangswandstärke aufweist, bewirkt wird. Wesentlich ist dabei, daß der Bereich 44 kleineren Durchmessers des Ziehringes 18 den Außendurchmesser des gestreckten Abschnittes 45 nicht dimensioniert, also nicht kalibriert. Vielmehr stellt sich die resultierende Wanddicke des gestreckten Abschnittes 45 in Abhängigkeit von den physikalischen Eigenschaften des zu verarbeitenden Materials und der Ausgangswandstärke ein. Der zwischen der inneren Mantelfläche 48 des Bereiches kleineren Durchmessers 44 und der äußeren Mantelfläche 46 des gestreckten Abschnittes 45 vorhandene Ringspalt 50 sollte während der gesamten Dauer des Ziehvorganges aufrechterhalten bleiben. Dies wird durch die schwimmende Lagerung des Ziehringes 18 über die Kugellager 28 erreicht. Die im Bereich der Stützschulter 41 bei der Bewegung des Ziehringes in Richtung des Pfeiles 42 auftretenden Umformkräfte bewirken eine selbsttätige Ausrichtung im Sinne einer Zentrierung des Ziehringes 18 zum Dorn 16 und damit auch zum Vorformling 14 und zum bereits gestreckten Abschnitt 45 desselben, so daß die relative radiale Lage zwischen Dorn 16, Ziehring 18 und Vorformling 14 im wesentlichen unverändert bleibt. Bei gleichbleibender Wandstärke des gestreckten Abschnittes 45 hat dies auch eine gleichbleibende radiale Erstreckung des Spaltes 50 zur Folge. In der Praxis muß jedoch damit gerechnet werden, daß die Wandstärke des Vorformlinges 10 und damit auch die Wandstärke des durch den Streckvorgang erhaltenen Zwischenerzeugnisses gewissen Schankungen unterliegt. Daraus folgt, daß die radiale Erstreckung des Spaltes 50 so bemessen sein sollte, daß sie etwas größer ist als die maximale Schwankungsbreite der Wandstärke im gestreckten Abschnitt 45. Alle anderen Unregelmäßigkeiten und Ungenauigkeiten, wie z.B. ein nicht genau vertikaler Verlauf des Dornes 16, der durch unpräzisen Einbau, aber auch durch elastische Verformung verursacht worden sein kann, werden durch die schwimmende Lagerung des Ziehringes 18 selbsttätig ausgeglichen.

Im allgemeinen wird der Vorformling 10 vor Beginn des Ziehvorganges in einem besonderen Arbeitsgang auf eine Temperatur gebracht, die wenig unterhalb der Glasumwandlungstemperatur liegt. Die oberhalb des Ziehringes 18 befindliche Hülse 52 dient im wesentlichen dazu, den Vorformling 10 beim relativen Einführen in die Hülse 52 im Bedarfsfall so nachzurichten, daß zumindest an seinem oberseitigen Endbereich seine Querschnittsform der Querschnittsform des Dornes 16 entspricht.

Abweichend von der vorbeschriebenen Verfahrensweise ist es möglich, den Ziehring stationär anzuordnen und statt dessen den Dorn 16 mit dem Vorformling 10 durch den Ziehring hindurchzubewegen. Es ist auch möglich, beide Teile, also Dorn 16 mit Vorformling 10 und Ziehring 18 gegenläufig zueinander zu bewegen.

Das Produkt des Ziehvorganges kann als Fertigerzeugnis, aber auch als Zwischenerzeugnis verwendet werden, welches durch weitere Umformvorgänge seinem Verwendungszweck angepaßt wird.

**Patentansprüche**

1. Verfahren zum Herstellen von Hohlkörpern aus orientiertem thermoplastischem Kunststoff, bei welchem der zylindrische Bereich eines hohlen, mit einem Boden versehenen Vorformlings bei einer Ausgangstemperatur, die unter der Glasumwandlungstemperatur liegt, unter gleichzeitiger Verringerung der Wandstärke durch einen mit einer konischen Stützschulter versehenen Ziehring zu einem gestreckten Formling gestreckt wird und innerhalb des Vorformlings zur Abstützung des zu streckenden Bereiches desselben ein Dorn angeordnet ist, dessen Außendurchmesser dem Innendurchmesser des zu streckenden zylindrischen Bereiches entspricht, dadurch gekennzeichnet, daß der Ziehring (18) quer zur Ziehrichtung (42) frei beweglich gelagert ist und unter der Einwirkung der ihn beaufschlagenden Umformkräfte sich seblsttätig zum Vorformling (10) und zu dem in diesem befindlichen Dorn (16) zentriert.

2. Verfahren nach Anspruch 1, dadurch gekennzeichnet, daß der Ziehring (18) quer zur Ziehrichtung (42) sich um ein Ausmaß bewegen kann, welches größer ist als der Spalt (50) zwischen dem Bereich (44) kleinsten Innendurchmessers des Ziehringes (18) und Außendurchmesser des gestreckten Bereiches (45) des Vorformlinges (10), bei zentrischer Lage der Teile zueinander.

3. Vorrichtung zum herstellen von Hohlkörpern aus thermoplastischem Kunststoff, bei welchem der zylindrische Bereich eines hohlen, mit einem Boden versehenen Vorformlings bei einer Ausgangstemperatur, die unter der Glasumwandlungstemperatur liegt, unter gleichzeitiger Veringerung der Wandstärke durch einen innenseitig mit einer konischen Stützschulter (41) versehenen Ziehring (18) gestreckt wird und innerhalb des zu streckenden Bereichs ein Dorn angeordnet ist, dessen Außendurchmesser des Innendurchmesser des gestreckten Bereiches entspricht, dadurch gekennzeichnet, daß der Ziehring (18) quer zur Ziehrichtung (42) frei bewegbar gelagert ist.

4. Vorrichtung nach Anspruch 3, dadurch gekennzeichnet, daß der kleinste Innendurchmesser des Ziehringes (18) größer ist als der Außendurchmesser des gestreckten Bereichs (45) des Vorformlinges und die maximal mögliche Querbewegung größer ist als der Spalt (50) zwischen dem Bereich (44) kleinsten Innendurchmessers des Ziehringes (18) und dem Außendurchmesser des gestreckten Abschnittes (45) des Vorformlinges (10).

5. Vorrichtung nach Anspruch 3 oder 4, dadurch gekennzeichnet, daß der Ziehring (18) zur Erzielung seiner Verschiebbarkeit quer zur Ziehrichtung (42) auf Kugeln (28) gelagert ist.

6. Vorrichtung nach Anspruch 3 oder 4, dadurch gekennzeichnet, daß der Ziehring (18) in einem Kardangelenk gelagert ist und die Wirkebene des Kardangelenks zur Schulter (41) des Ziehringes (18) einen Abstand aufweist, der ein Pendeln des Ziehringes um ein Maß erlaubt, das größer ist als Spalt (50) zwischen dem Bereich (44) kleinsten Innendurchmessers des Ziehringes (18) und dem Außendurchmesser des gestreckten Abschnittes (45) des Vorformlinges (10).

**Revendications**

1. Procédé pour fabriquer des corps creux en matière thermoplastique orientée, consistant à prendre une ébauche ayant un corps cylindrique pourvu d'un fond bombé, et portée à une température de départ, inférieure à la température de vitrification, pour étirer la paroi cylindrique de l'ébauche et en réduire l'épaisseur, en faisant passer l'ébauche à travers une bague d'extrusion pourvue intérieurement d'un épaulement conique afin d'obtenir une ébauche étirée, tandis qu'un mandrin est disposé dans l'ébauche, pour soutenir la paroi de celle-ci à l'endroit de sa partie à étirer, le diamètre extérieur de ce mandrin correspondant au diamètre intérieur de la partie cylindrique à étirer, procédé caractérisé en ce qu'on prévoit pour la bague d'extrusion (18) un montage tel que cette bague puisse se déplacer librement dans un sens transversal à celui de l'étirage (42), pour assurer automatiquement le centrage de la bague d'extrusion (18) par rapport à l'ébauche (10) et au mandrin (16) que contient l'ébauche, sous l'action des efforts de transformation qui s'exercent sur la bague d'extrusion (18).

2. Procédé selon la revendication 1, caractérisé en ce que la bague d'extrusion (18) peut se déplacer transversalement par rapport au sens d'étirage (42), d'une amplitude supérieure à la valeur de l'interstice (50) qui existe entre la partie de moindre diamètre (44) de la bague d'extrusion (18) et le diamètre extérieur de la partie étirée (45) de l'ébauche (10), en position de centrage réciproque des pièces concernées.

3. Dispositif pour fabriquer des corps creux en matière thermoplastique, en façonnant la partie cylindrique d'une ébauche creuse à fond bombé, qui se trouve à une température de départ inférieure à la température de vitrification, de manière à réduire en même temps l'épaisseur de la paroi de l'ébauche que l'on étire en la faisant passer à travers une bague d'extrusion (18) pourvue intérieurement d'un épaulement conique d'appui (41), tandis qu'un mandrin est disposé à l'intérieur de la partie à étirer de l'ébauche, le diamètre extérieur de ce mandrin correspondant au diamètre intérieur de la partie étirée, dispositif caractérisé en ce que la bague d'extrusion (18) est montée de manière à pouvoir se déplacer librement dans un sens transversal au sens d'étirage (42).

4. Dispositif selon la revendication 3, caractérisé en ce que le diamètre intérieur minimum de la bague d'extrusion (18) est supérieur au diamètre extérieur de la partie étirée (45) de l'ébauche, et en ce que l'amplitude maximum de déplacement transversal de la bague d'extrusion est supérieure à l'épaisseur de l'interstice (50) qui existe entre la partie de diamètre intérieur minimum (44) de la bague d'extrusion (18) et le diamètre extérieur de la partie étirée (45) de l'ébauche (10).

5. Dispositif selon l'une des revendications 3 ou 4, caractérisé en ce que la bague d'extrusion (18) est montée en appui sur des billes (28), pour assurer sa mobilité transversale par rapport au sens d'étirage (42).

6. Dispositif selon l'une des revendications 3 ou 4, caractérisé en ce que la bague d'extrusion (18) est montée dans un système articulé à la Cardan, et en ce que le plan des axes d'articulation de ce système est écarté d'une certaine distance par rapport à l'épaulement d'appui (41) de la bague d'extrusion (18), pour permettre un mouvement pendulaire de la bague d'extrusion, avec une amplitude supérieure à la valeur de l'interstice (50) qui existe entre la partie de diamètre intérieur minimum (44) de la bague d'extrusion (18) et le diamètre extérieure de la partie étirée (45) de l'ébauche (10).

## Claims

1. A process for producing hollow bodies of oriented thermoplastic material wherein the cylindrical region of a hollow preform provided with a bottom is subjected to stretching at a starting temperature which is below the vitreous transition temperature, with the wall thickness being reduced at the same time, through a drawing ring provided with a conical support shoulder, to provide a stretched shaped member, and a mandrel is inserted within the preform to support the region thereof which is to be subjected to stretching, the outside diameter of the mandrel corresponding to the inside diameter of the cylindrical region to be subjected to stretching, characterised in that the drawing ring (18) is mounted to be freely movable transversely with respect to the drawing direction (42) and, under the effect of the shaping forces acting thereon, is automatically centered relative to the preform (10) and relative to the mandrel (16) which is disposed in the preform.

2. A process according to claim 1 characterised in that the drawing ring (18) can move transversely with respect to the drawing direction (42) by an amount which is greater than the gap (50) between the region (44) of smallest inside diameter of the drawing ring (18) and the outside diameter of the stretched region (45) of the preform (10), when the components are in a concentric position relative to each other.

3. Apparatus for producing hollow bodies of thermoplastic material wherein the cylindrical region of a hollow preform provided with a bottom is subjected to stretching at a starting temperature which is below the vitreous transition temperature, with the wall thickness being reduced at the same time, through a drawing ring (18) provided on its inside with a conical support shoulder (41), and arranged within the region to be stretched is a mandrel, the outside diameter of which corresponds to the inside diameter of the stretched region, characterised in that the drawing ring (18) is mounted freely movably transversely with respect to the drawing direction (42).

4. Apparatus according to claim 3 characterised in that the smallest inside diameter of the drawing ring (18) is larger than the outside diameter of the stretched region (45) of the preform and the maximum possible transverse movement is greater than the gap (50) between the region (44) of smallest inside diameter of the drawing ring (18) and the outside diameter of the stretched portion (45) of the preform (10).

5. Apparatus according to claim 3 or claim 4 characterised in that the drawing ring (18) is mounted on balls (28) to provide for displaceability thereof transversely with respect to the drawing direction (42).

6. Apparatus according to claim 3 or claim 4 characterised in that the drawing ring (18) is mounted in a cardan joint and the operative plane of the cardan joint is at a spacing relative to the shoulder (41) of the drawing ring (18), which permits a swinging movement of the drawing ring by an amount which is greater than the gap (50) between the region (44) of smallest inside diameter of the drawing ring (18) and the outside diameter of the stretched portion (45) of the preform (10).

# FIG.1

# FIG. 2

FIG.3